# EUROPEAN PATENT APPLICATION

(11) **EP 1 202 148 A1**
(43) Date of publication of application: **02.05.2002**
(21) Application number: 00309608.8
(22) Date of filing: 31.10.2000
(51) Int. Cl.: G06F 1/00, G06F 11/14

(54) **Virus check on altered data**

(71) Applicant: Hewlett-Packard Company, A Delaware Corporation, Palo Alto, CA 94304 (US)
(72) Inventor: Camble, Peter Thomas, Bishopston, Bristol BS7 9HT (GB); Withnell, Shay, Brislington, Bristol BS4 4HA (GB)
(74) Representative: Lawman, Matthew John Mitchell

(57) **Abstract**

A method of selectively transferring (114) to a second device (4) data relating to modifications made to a file (14) of a first device (2) to permit a modified file to be provided at the second device (4) includes the steps of identifying of the files that have been modified (104), checking each modified file for the presence of a computer virus signature (110) and transferring all the data relating to a modified file to the second device if, and only if, no computer virus signature was detected in the modified file. The altered file blocks may be identified and checked for the presence of a virus signature.

## Description

### BACKGROUND OF THE INVENTION

### 1. Field of the Invention

The present invention relates generally to methods and devices for transferring data relating to file modifications as used, for example, in backing up files held on one storage device on a second storage device. The present invention particularly relates to such methods and devices which include anti-computer virus methods.

### 2. Description of the Related Art

Computer viruses are computer programs which are designed to run on a computer without authorisation and which are often passed from an infected computer to an uninfected computer when a file containing the computer virus is transferred from the former to the latter. Much time and effort is spent in preventing such cross-infection, the prior art approaches falling into two broad categories.

A first approach is for a computer to accept a file from another computer, for example by downloading a file from the internet or other networked computer, which then runs a virus detection program which checks the downloaded files for signatures of viruses of which the anti-virus program is aware. If a virus infected file is detected the user of computer system is generally alerted and can choose from remedial courses of action offered by the particular anti-virus program being used and the virus identified. The options may include neutralisation or deletion of the virus of the virus or deletion of the infected file, for example.

This approach has potential disadvantages. It may take some time after downloading the file before the virus is detected if the anti-virus program is only used intermittently, eg once every 24 hours, during which time the infected file may be transferred elsewhere so infecting further computer systems. In some cases the anti-virus program may be inadvertently switched off so allowing the virus to infect the system undetected. To address these points, an alternative known approach adopted in the particular case of downloading files from a network to a client is to prevent such files containing a computer virus from being transferred to the client in the first place.

US 6,088,803 describes a method for virus checking a data object to be downloaded to a client device, the method being implemented on a network device coupled to the client device by a communications link, the method comprising the steps of retrieving a data object to be downloaded to the client device; scanning the data object for a computer virus, and downloading the data object to the client device if no computer virus is detected, wherein the data object is segmented into a series of contiguous portions, the retrieving, scanning and downloading steps being performed for each of said contiguous portions. One particularly described system for checking network data to be downloaded to a client device, eg from an Internet server, is one in which a data object is retrieved from a content server via an Internet connection to a network device which includes a virus checker. The virus checker scans the retrieved content for viruses and, if clear, forwards the content to the client computer system.

Another circumstance where it is advantageous to conduct virus checking by the first device from which the files are being transferred to a second device, is where the second device is used to hold a copy of one or more files stored on the first device, the copies being updated as the files are modified on the first device. The second device could be, for example, a mirror device or a back-up storage device.

One prior art approach to such a back-up method with a virus checking method includes full volume checking by an anti-virus program, ie all files in a volume, and then, if no viruses are detected, proceeding to transfer back-up data to the second device in a known manner. This is very time consuming because every file is checked on every virus check. It is possible to configure some prior art anti-virus software to only check files with an altered timestamp but this opens the door to infection of files by viruses that do not alter the timestamp. However, in both cases there is also the possibility that a file may be declared clean by the anti-virus program only to be infected in the interval between the file being checked and the back-up program being invoked. The back-up program would then identify the infected file as a modified file and then transfer it to the second device along with the infecting virus.

The present invention seeks to provide an improved method of and a device for selectively transferring to a second device data relating to modifications made to a file of a first device to obtain a modified file.

### SUMMARY OF THE INVENTION

The present invention, in a first aspect, provides a method of selectively transferring to a second device data relating to modifications made to a file of a first device to permit a modified file to be provided at the second device which includes the steps of, identifying of the files that have been modified, checking each modified file for the presence of a computer virus signature, and transferring all the data relating to a modified file to the second device if, and only if, no computer virus signature was detected in the modified file.

According to the method of the present invention, modified files are first identified and then those modified files checked for viruses and transferred if found clean. The opportunity for virus infection of a file found by the virus checker to be clear is reduced compared to the prior art approach for two principal reasons. The files identified as modified are virus checked, and not also unmodified files, and then transferred which provides a shorter time for a virus to infect a cleared file while checking the rest and effecting transfer. If a file identified at the outset as unmodified is subsequently infected with a virus it will not be checked by the virus checker but also will not be transferred.

The newly infected file would be picked up on the next transfer cycle as being infected.

The entirety of each of the modified files may be checked for the presence of a computer virus signature but it is preferred that the step of identifying these files that have been modified includes identifying the altered blocks of these files and that the altered blocks are checked for the presence of a computer virus program. This provides quicker virus checking and is based on the applicant's realisation that if part of the virus of an infected file is present in a block, it can still be recognised as being a virus by virtue of the signature that is present in the block.

The altered blocks may be further modified, in a reversible manner, to make them compatible with the anti-virus computer program, for example by adding data to provide a block size compatible with the anti-virus program.

The further modified blocks may be stored in a random access memory of the first device prior to the step of checking the further modified blocks for the presence of a computer virus signature to reduce greatly the chance of infection by a virus after checking by the virus checker.

The data relating to a modified file to be transferred to the second device includes the altered blocks and data specifying the location of the blocks in the file in know manner.

According to a second aspect of the present invention, a computer programmed to selectively transfer to a second device data relating to modifications made to a file of a first device to permit a modified file to be provided at the second device, the computer is programmed to identify files that have been modified, check each modified file for the presence of a computer virus signature, and transfer all the data relating to a modified file to the second device if, and only if, no computer virus signature was detected in the modified file.

The computer may be programmed to check the entirety of each of the modified files for the presence of a computer virus signature but it is preferred that the computer is programmed such that the step of identifying these files that have been modified includes identifying the altered blocks of these files and that the computer is programmed to check the altered blocks for the presence of a computer virus program.

The computer may programmed to further modify the altered blocks in a reversible manner, to make them compatible with the anti-virus computer program, for example by being programmed to modify the altered blocks by adding data to provide a block size compatible with the anti-virus program.

The computer may be programmed to store the further modified blocks in a random access memory of the first device prior to the step of checking the further modified blocks for the presence of a computer virus signature.

### BRIEF DESCRIPTION OF THE DRAWINGS

Embodiments of the invention will now be described, by way of example only, with reference to the accompanying drawings, of which:
Figure 1 is a flow diagram illustrating an embodiment of the method of the present invention; and
Figure 2 is a schematic diagram illustrating an embodiment of the device of the present invention.

### DETAILED DESCRIPTION

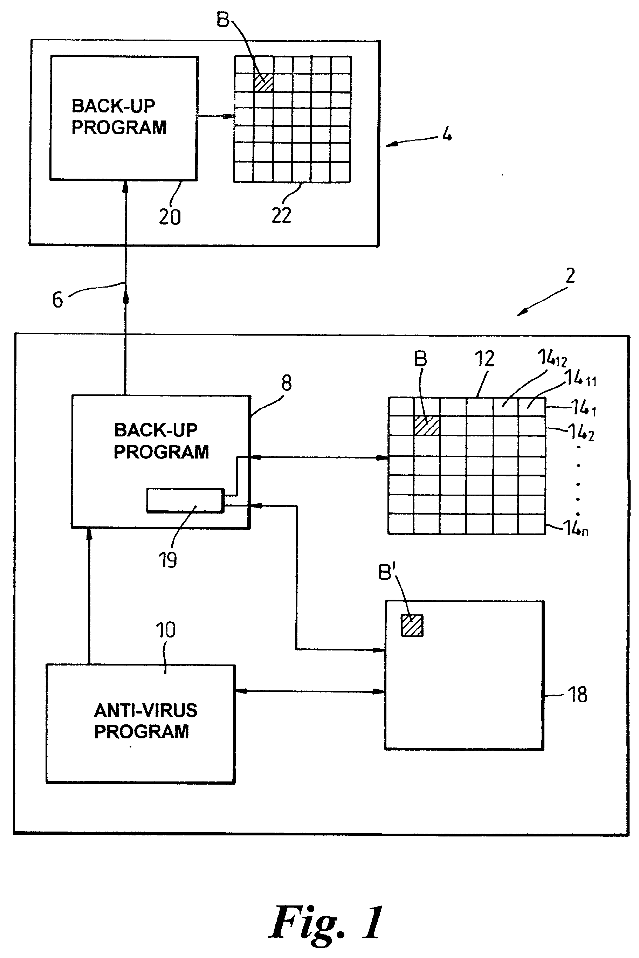

Referring to Figure 1, a first device 2, a PC, is connected to a second device 4, a fileserver, by way of a network connection 6. The PC 2 is configured to run a back-up program 8 and an anti-virus program 10. It includes a volume 12 of a hard disc drive for data storage holding a number of files 14₁, 14₂ and so on, each made up of a series of blocks 16 of memory 14₁₁, 14₁₂, and so on. The PC also includes random access memory 18.

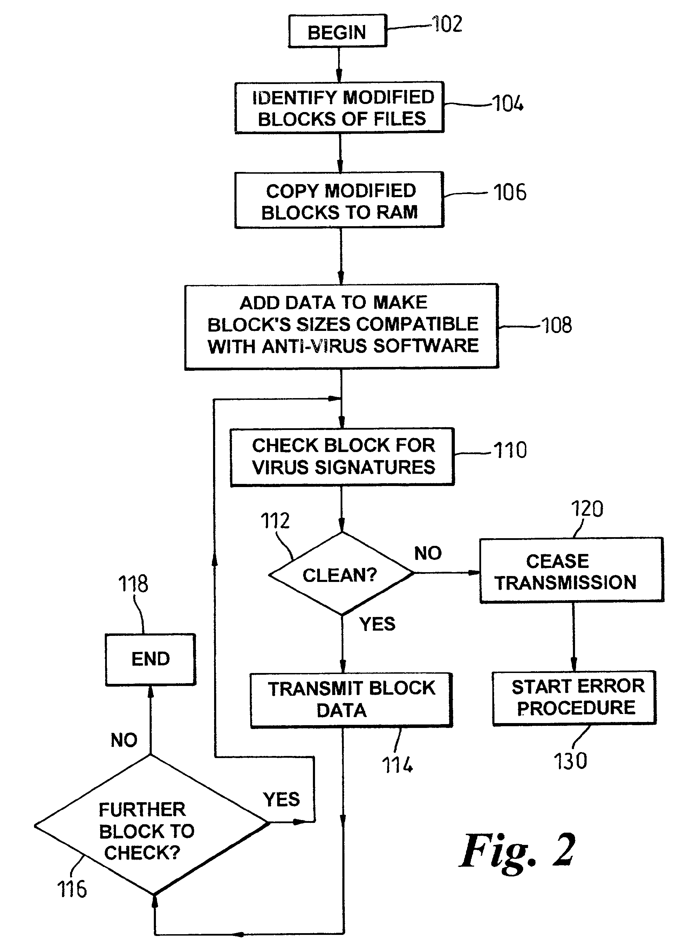

The fileserver 4 is configured to run a back-up program 20 and includes a hard disc drive with volume 22 for holding a back-up copy of the volume 12 of the hard disc drive of the PC 2. Methods of operation of the embodiment of Figure 1 will now be described with reference to the flow chart of Figure 2.

The procedure begins (step 102) when the PC 2 determines a back-up is to be performed whereupon the back-up program 8 identifies those blocks of files in the volume 12 which have been modified since the last back-up procedure took place (step 104). This can be achieved in any suitable fashion including those already well known in the art. We will assume at least block B of file 14₂ is an altered block.

The altered block B (often also referred to as a "Delta Block") is then made available to the anti-virus program by the back-up program copying the block B (step 106) to RAM 18 and further modifying the block B to obtain block B' (step 108) which is compatible with the anti-virus program 10. In this embodiment, the back-up program 8 includes a block size matcher 19 which pads the block B as necessary to be compatible with the anti-virus program 10, for example by appending '0's or data from the file adjacent the block.

The anti-virus program then checks the block B' for virus signatures (step 110). If no virus signature is found (at step 112) the block B' is converted back to its original form B and transmitted to the fileserver 4 (step 114). The back-up program 20 of the fileserver 20 then uses the received block B to update the corresponding block on back-up hard disc drive 22 in known manner.

The back-up program 8 then determines if there are further modified blocks that require transmission to the fileserver 4. If yes, the above-described steps 110 onwards are repeated for this next block. If no virus signatures are found in any of the blocks they will eventually all be transmitted to the fileserver 4.

If however any such modified block is found to include a virus signature (at step 110) the anti-virus program will raise an error condition and interrupt the back-up program 8 (step 120) and cause the back-up program 8 to enter an error procedure (step 130) in which the infected file associated with that block is identified. This file identification is also transmitted to the fileserver 4 and the effects of any previously transmitted, but virus-free, blocks are reversed by the fileserver back-up program restoring that file to its previous state. This is achieved by the server to rolling-back its back-up transactions to remove the Delta Blocks for that file on that back-up.

A queue is formed of blocks B passed to the random access memory 18 to await checking by the virus checker 10. The queue is provided to have a pre-selected maximum size, to ensure data rate matching between the client back-up and anti-virus program.

Once the back-up is complete, for each file marked as infected, the user will be notified of the virus and prompted to take appropriate action (quarantine, delete, ignore, fix etc). If the user chooses not to delete or fixe the file, the file will remain marked as infected in the client back-up file database so it does not get backed-up in future. If the user fixes the file, that file will be backed-up to the server in the usual manner once fixed.

## Claims

1. A method of selectively transferring to a second device data relating to modifications made to a file of a first device to permit a modified file to be provided at the second device including the steps of:
a) identifying of the files that have been modified;
b) checking each modified file for the presence of a computer virus signature; and
c) transferring all the data relating to a modified file to the second device if, and only if, no computer virus signature was detected in the modified file.

2. A method as claimed in claim 1, in which the entirety of each of the modified files are checked for the presence of a computer virus signature.

3. A method as claimed in claim 1, in which the step of identifying these files that have been modified includes identifying the altered blocks of these files.

4. A method as claimed in claim 3, in which the altered blocks are checked for the presence of a computer virus program.

5. A method as claimed in claim 4, in which the altered blocks are further modified, in a reversible manner, to make them compatible with the anti-virus computer program.

6. A method as claimed in claim 5, in which the altered blocks are modified by adding data to provide a block size compatible with the anti-virus program.

7. A method as claimed in claim 7, in which the further modified blocks are stored in a random access memory of the first device prior to the step of checking the further modified blocks for the presence of a computer virus signature.

8. A method as claimed in claim 1, in which the data relating to a modified file includes the altered blocks and data specifying the location of the blocks in the file.

9. A computer programmed to selectively transferring to a second device data relating to modifications made to a file of a first device to permit a modified file to be provided at the second device, the computer being programmed to
a) identify files that have been modified;
b) check each modified file for the presence of a computer virus signature; and
c) transfer all the data relating to a modified file to the second device if, and only if, no computer virus signature was detected in the modified file.

10. A computer method as claimed in claim 9, in which the computer is programmed to check the entirety of each of the modified files for the presence of a computer virus signature.

11. A computer method as claimed in claim 9, in which the computer is programmed such that the step of identifying these files that have been modified includes identifying the altered blocks of these files.

12. A computer method as claimed in claim 11, in which the computer is programmed to check the altered blocks for the presence of a computer virus program.

13. A computer as claimed in claim 12, in which the computer is programmed to further modify the altered blocks in a reversible manner, to make them compatible with the anti-virus computer program.

14. A computer as claimed in claim 13, in which the computer is programmed to modify the altered blocks by adding data to provide a block size compatible with the anti-virus program.

15. A computer as claimed in claim 14, in which the computer is programmed to store the further modified blocks in a random access memory of the first device prior to the step of checking the further modified blocks for the presence of a computer virus signature.

16. A computer as claimed in claim 9, in which the data relating to a modified file includes the altered blocks and data specifying the location of the blocks in the file.
